# EUROPÄISCHE PATENTSCHRIFT

(11) **EP 4 388 294 B1**
(45) Veröffentlichungstag und Bekanntmachung des Hinweises auf die Patenterteilung: **25.06.2025**
(21) Anmeldenummer: 22765834.1
(22) Anmeldetag: 17.08.2022
(51) Int. Cl.: G01M 3/28, G01R 31/52

(54) **PRÜFVORRICHTUNG ZUM PRÜFEN EINER DICHTHEIT EINES SCHWEISSKNOTENS, PRÜFSET MIT EINER SOLCHEN PRÜFVORRICHTUNG SOWIE VERFAHREN ZUM PRÜFEN EINER DICHTHEIT EINES SCHWEISSKNOTENS MITTELS EINER PRÜFVORRICHTUNG**
TESTING DEVICE FOR TESTING THE SEALING TIGHTNESS OF A WELD NODE, TESTING SET HAVING A TESTING DEVICE OF THIS TYPE, AND METHOD FOR TESTING THE SEALING TIGHTNESS OF A WELD NODE BY MEANS OF A TESTING DEVICE
DISPOSITIF DE CONTRÔLE DE L'ÉTANCHÉITÉ D'UN NOEUD DE SOUDURE, KIT DE CONTRÔLE DOTÉ D'UN TEL DISPOSITIF DE CONTRÔLE ET PROCÉDÉ DE CONTRÔLE DE L'ÉTANCHÉITÉ D'UN NOEUD DE SOUDURE AU MOYEN D'UN DISPOSITIF DE CONTRÔLE

(30) Priorität: 18.08.2021 DE 102021121391
(43) Veröffentlichungstag der Anmeldung: 26.06.2024
(73) Patentinhaber: Lisa Dräxlmaier GmbH, 84137 Vilsbiburg (DE)
(72) Erfinder: STRASSER, Stefan, 84036 Kumhausen (DE); ELS, Thomas, 85646 Anzing (DE)
(86) Internationale Anmeldenummer: PCT/EP2022/072959
(87) Internationale Veröffentlichungsnummer: WO 2023/021089

(56) Entgegenhaltungen:
- WO-A1-2008/061343
- CN-A- 107 884 143
- US-A- 3 949 598

## Beschreibung

### Technisches Gebiet

Die vorliegende Erfindung betrifft eine Prüfvorrichtung zum Prüfen einer Dichtheit eines mehrere Kabel zu einem Kabelbündel verbindenden Schweißknotens. Weiter betrifft die Erfindung ein Prüfset, das diese Prüfvorrichtung umfasst, sowie ein Verfahren zum Prüfen einer Dichtheit eines mehrere Kabel zu einem Kabelbündel verbindenden Schweißknotens mittels einer Prüfvorrichtung oder mittels eines Prüfsets.

### Stand der Technik

Im Fahrzeugbau, insbesondere Serienfahrzeugbau, besteht der Bedarf, mehrere elektrische Leiterkabel mittels eines Schweißknotens zu einem Kabelbündel zu verbinden. Ein solcher Schweißknoten, mittels dessen die Kabel zu dem Kabelbündel verbunden sind und an dem die Kabel voneinander abzweigen, **kann als "Splice" bezeichnet werden. Aufgrund der Viel**falt und Vielzahl solcher Schweißknoten bzw. Splices ergibt sich unter anderem das Problem, die in einem entsprechenden Kraftfahrzeug zum Einsatz kommenden Schweißknoten hinsichtlich ihrer Dichtheit zu prüfen. Wenn ein solcher Schweißknoten undicht ist, kann es dazu kommen, dass ein Fluid, beispielsweise Wasser, in unerwünschter Weise in den Schweißknoten eindringt und dort zwischen eine jeweilige Seele und eine jeweilige Kabelisolierung gerät. Dieses Fluid bzw. die Flüssigkeit wird so in unerwünschter Weise (insbesondere aufgrund von Kapillarkräften) weiter in ein elektrisches Netz des Kraftfahrzeugs hineintransportiert, wodurch es zu Schäden an dem elektrischen Netz und/oder an elektrischen Bauteilen des Kraftfahrzeugs kommen kann. Zum Prüfen der Dichtheit des Schweißknotens ist es aus dem Stand der Technik zum Beispiel bekannt, den Schweißknoten in ein Wasserbad zu legen und die Kabel an ihrem freien Ende mit Druckluft zu beaufschlagen. Ist der Schweißknoten in diesem Fall undicht, steigen in dem Wasserbad Bläschen auf. Bei dieser herkömmlichen Prüfmethode wird das mittels des Schweißknotens verbundene Kabelbündel jedoch beschädigt, da durch den undichten Schweißknoten Wasser in die Kabel eindringen kann. Dieses Kabelbündel kann nicht mehr der Produktion des Kraftfahrzeugs zugeführt werden, was ökonomisch und ökologisch ungünstig ist.

Die Druckschrift US 3 949 598 A betrifft ein Verfahren und Mittel zum Anzeigen von Leckagen durch die Wand eines Gefäßes.

Die Druckschrift WO 2008/061343 A1 betrifft eine Vorrichtung und ein Verfahren zum Prüfen von Rohren und insbesondere zum Prüfen der Integrität von Schweißnähten an Rohren.

Aus der Druckschrift CN 107884143 A sind eine Vorrichtung zur Überprüfung der Dichtheit eines Kabelbaums und ein Leckdetektionssystem bekannt.

### Beschreibung der Erfindung

Es ist Aufgabe der Erfindung, eine Möglichkeit zum besonders effizienten und insbesondere zerstörungsfreien Prüfen einer Dichtheit eines mehrere Kabel zu einem Kabelbündel verbindenden Schweißknotens bereitzustellen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart.

Mittels der erfindungsgemäßen Prüfvorrichtung ist ein zerstörungsfreies Prüfen einer Dichtheit eines mehrere Kabel zu einem Kabelbündel verbindenden Schweißknotens ermöglicht. Hierzu weist die Prüfvorrichtung ein erstes Prüfkammerwandelement auf, das an dessen kammerseitiger Breitseite einen ersten Prüfkammeranteil aufweist. Das erste Prüfkammer**wandelement kann als "Unterwerkzeug" bezeichnet werden. Weiter weist die Prüfvorrichtung** ein zweites Prüfkammerwandelement auf, das an dessen kammerseitiger Breitseite einen **zweiten Prüfkammeranteil aufweist. Das zweite Prüfkammerwandelement kann als "Oberwerkzeug" bezeichnet werden. Die beiden Prüfkammerwandelemente und deren Prüfkam**meranteile sind bei der Prüfvorrichtung einander zugewandt und korrespondieren zum Bilden bzw. Schließen einer Prüfkammer miteinander. Das jeweilige Prüfkammerwandelement bzw. der jeweilige Prüfkammeranteil ist beispielsweise dadurch erzeugt, dass ein Materialkörper des Prüfkammerwandelements zum Ausbilden des entsprechenden Prüfkammeranteils bearbeitet wird. Demnach kann es sich bei dem jeweiligen Prüfkammeranteil um eine jeweilige Materialausnehmung handeln.

Die Prüfvorrichtung weist weiter eine Verstelleinrichtung auf, mittels derer die Prüfvorrichtung zwischen einer Einlegestellung und einer Prüfstellung verstellbar ist. Dabei ist die Einlegestellung dadurch charakterisiert, dass die Prüfkammer zum Einlegen oder Herausnehmen des Schweißknotens geöffnet ist. Dahingegen ist die Prüfstellung dadurch charakterisiert, dass die Prüfkammeranteile zueinander hin gespannt sind, wodurch die Prüfkammer gebildet ist. Die Prüfkammerwandelemente sind also unter einem Verstellen der Prüfvorrichtung mittels der Verstelleinrichtung zueinander hin bzw. aneinander spannbar. Sind die Prüfkammerwandelemente zueinander hin gespannt, ist durch die beiden Prüfkammeranteile die Prüfkammer der Prüfvorrichtung gebildet bzw. geschlossen. In der Prüfstellung liegen die Breitseiten - insbesondere deckungsgleich - der Prüfkammerwandelemente aneinander bzw. aufeinander, sodass die beiden Prüfkammeranteile zueinander hingewandt sind und miteinander die Prüfkammer bilden. Insbesondere ist vorgesehen, dass die Verstelleinrichtung eine Arretiereinrichtung aufweist, sodass ein unerwünschtes Verstellen der Prüfvorrichtung aus der Prüfstellung und/oder aus der Einlegestellung verhindert ist.

Die Prüfvorrichtung weist weiter einen Prüfdruckanschluss auf, der an dessen kammerseitigem Ende in einen der Prüfkammeranteile mündet und dessen anderes Ende mit einem Druckprüfgerät fluidisch verbindbar ist. Insbesondere ist der Prüfdruckanschluss an dem zweiten Prüfkammerwandelement, das heißt an dem Oberwerkzeug, angeordnet. Der Prüfdruckanschluss kann alternativ an dem ersten Prüfkammerwandelement, das heißt an dem Unterwerkzeug, angeordnet sein. Das entsprechend andere der Prüfkammerwandelemente ist dabei frei von einem solchen Prüfdruckanschluss.

Die Prüfvorrichtung weist weiter eine Kabeldurchführung auf, die mit den Kabeln des zu prüfenden Kabelbündels bzw. des zu prüfenden Schweißknotens korrespondiert. Die Kabeldurchführung ist dabei dazu ausgebildet, die Kabel in der Prüfstellung zu fixieren. Mit anderen Worten dient die Kabeldurchführung dazu, die Kabel des zu prüfenden Kabelbündels örtlich bzw. positionell zu fixieren, sodass der Schweißknoten in der Prüfkammer angeordnet ist und freie Enden der Kabel aus der Prüfkammer herausragen. Dabei sind in der Prüfstellung der Prüfvorrichtung die Prüfkammer und eine Umgebung der Prüfkammer über die Kabeldurchführung fluidisch voneinander abgedichtet, wenn der Schweißknoten in der Prüfkammer angeordnet ist und die Kabel des Kabelbündels durch die Kabeldurchführung aus der Prüfkammer herausgeführt sind. Ist also das Kabelbündel bestimmungsgemäß in die Prüfvorrichtung eingelegt, bilden die einzelnen Kabel des Kabelbündels Dichtungselemente für die Kabeldurchführung. In der Prüfstellung ist also die Prüfkammer gegen die Umgebung der Prüfkammer fluidisch vollständig abgedichtet, wenn zum einen die beiden Prüfkammerwandelemente zueinander hin gespannt sind und dabei die Kabel mittels der Kabeldurchführung aus der Prüfkammer in die Umgebung geführt sind.

Ist in die Prüfkammer der zu prüfende Schweißknoten eingelegt, wobei die Kabel über die Kabeldurchführung in die Umgebung geführt sind, ist der Schweißknoten bzw. das Kabelbündel mittels der Prüfvorrichtung auf Dichtheit prüfbar. Hierzu ist insbesondere vorgesehen, dass an dem Prüfdruckanschluss das Druckprüfgerät, beispielsweise ein Lecktest-Computer angeschlossen wird. Sodann wird ein entsprechendes Prüfprogramm des Lecktest-Computers gestartet, und ein Prüfergebnis wird an einer Ausgabeeinheit des Lecktest-Computers bereitgestellt.

Die Prüfvorrichtung bietet beim Prüfen der Dichtheit des Schweißknotens den Vorteil, dass das Kabelbündel durch das Prüfen nicht beschädigt wird, da das Prüfen des Schweißknotens auf einer Luftdruckmessung in der Prüfkammer basiert. Insbesondere gerät das zu prüfende Kabelbündel bzw. der zu prüfende Schweißknoten nicht in Kontakt mit einer Flüssigkeit, was letztendlich bedeutet, dass das geprüfte Kabelbündel - sofern festgestellt wurde, dass der Schweißknoten dicht ist - noch vollfunktionsfähig ist. Denn beim Prüfen des Kabelbündels wird dieses nicht in ungünstiger Weise befeuchtet oder durchfeuchtet. Demnach kann das geprüfte Kabelbündel mit dem dichten Schweißknoten (wieder) einem Produktionsprozess zugeführt werden.

Die Kabeldurchführung ist aus einem ersten Kabeldurchführungselement und einem zweiten Kabeldurchführungselement gebildet. Dabei ist das erste Kabeldurchführungselement an dem ersten Prüfkammerwandelement gehalten, wohingegen das zweite Kabeldurchführungselement an dem zweiten Prüfkammerwandelement gehalten ist. Die Kabeldurchführung weist also ein Kabeldurchführungselementpaar auf. Die Kabeldurchführung ist insbesondere zumindest teilweise aus Silikon hergestellt. Somit kann eines der Kabeldurchführungselemente aus Silikon hergestellt sein. Ferner können beide Kabeldurchführungselemente aus Silikon hergestellt sein. Das jeweilige Kabeldurchführungselement kann beispielsweise mittels eines generativen Herstellungsverfahrens, zum Beispiel 3D-Druckens, hergestellt sein. Alternativ oder zusätzlich kann das jeweilige Kabeldurchführungselement als ein Gussteil, insbesondere Spritzgussteil, ausgebildet sein und/oder mittels eines spanenden Fertigungsverfahrens gebildet worden sein.

Indem die Kabeldurchführung das an dem ersten Prüfkammerwandelement gehaltene, erste Kabeldurchführungselement und das an dem zweiten Prüfkammerwandelement gehaltene, zweite Kabeldurchführungselement aufweist, ist die Kabeldurchführung mittels eines Verstellens der Prüfvorrichtung durch die Verstelleinrichtung öffenbar bzw. schließbar. Daher ist es besonders einfach, die Kabel des zu prüfenden Kabelbündels in die Prüfvorrichtung einzulegen und über die Kabeldurchführung aus der Prüfkammer bzw. aus den Prüfkammerwandelementen herauszuführen.

Um einen besonders sicheren Sitz der Kabeldurchführungselemente an dem jeweiligen Prüfkammerwandelement zu gewährleisten, weist die Prüfvorrichtung gemäß einer weiteren Ausgestaltung eine Verbindungseinheit auf, mittels derer das jeweilige Kabeldurchführungselement und das jeweilige Prüfkammerwandelement reversibel lösbar formschlüssig aneinander befestigbar sind. Die Verbindungseinheit weist beispielsweise Sicherungselemente und mit den Sicherungselementen korrespondierende Sicherungselementaufnahmen auf. Beispielsweise kann das jeweilige Kabeldurchführungselement die Sicherungselemente aufweisen, wobei das jeweilige Prüfkammerwandelement die Sicherungselementaufnahmen aufweist. Somit sind die Kabeldurchführungselemente formschlüssig in das jeweilige Prüfkammerwandelement einsetzbar. So ist zum Beispiel gewährleistet, dass die Kabeldurchführungselemente an Ort und Stelle, das heißt an dem jeweiligen Prüfkammerwandelement befestigt, bleiben, selbst wenn die Prüfvorrichtung mittels der Verstelleinheit aus der Prüfstellung in die Einlegestellung verstellt wird.

In einer weiteren Ausbildung der Prüfvorrichtung ist vorgesehen, dass das erste Kabeldurchführungselement und das zweite Kabeldurchführungselement gleich ausgebildet sind. Das bedeutet, dass das erste Kabeldurchführungselement und das zweite Kabeldurchführungselement eine gleiche Gestalt bzw. Außenkontur aufweisen. Ferner kann vorgesehen sein, dass das erste Kabeldurchführungselement und das zweite Kabeldurchführungselement aus dem gleichen Material gebildet sind. Damit geht einher, dass die Prüfkammerwandelemente, insbesondere deren Prüfkammeranteile, zumindest im Bereich der Kabeldurchführung, gleich ausgebildet sind, sodass es beispielsweise möglich wäre, das erste Kabeldurchführungselement wahlweise an dem ersten Prüfkammerwandelement oder an dem zweiten Prüfkammerwandelement bestimmungsgemäß zu befestigen. Anders ausgedrückt sind die gleich ausgebildeten Kabeldurchführungselemente zum Beispiel gegeneinander austauschbar. Indem also die Kabeldurchführungselemente als Gleichteile ausgebildet sind, ergibt sich in vorteilhafter Weise ein besonders einfacher Aufbau der Prüfvorrichtung.

Ferner ist es in diesem Zusammenhang denkbar, dass die Prüfvorrichtung mehr als nur zwei Kabeldurchführungselemente aufweist, insbesondere einen Satz von Kabeldurchführungselementen bzw. Kabeldurchführungselementpaaren aufweist. Somit ist die Prüfvorrichtung besonders einfach und/oder aufwandsarm an unterschiedliche Kabelbündel, deren Dichtheit zu überprüfen ist, anpassbar.

Um in der Prüfstellung zwischen den Kabeldurchführungselementen eine besonders zuverlässige Dichtwirkung zu gewährleisten, ist gemäß einer weiteren Ausbildung der Prüfvorrichtung vorgesehen, dass die Kabeldurchführungselemente unter einem Verstellen der Prüfvorrichtung in die Prüfstellung elastisch reversibel aneinander spannbar sind. Demnach können die Kabeldurchführungselemente zum Beispiel aus einem elastischen Material gebildet sein, wodurch die zwischen den Kabeldurchführungselementen angeordneten Kabel sich unter einem Verstellen der Prüfvorrichtung in die Prüfstellung besonders dicht bzw. innig an die Kabeldurchführungselemente und infolgedessen an die Kabeldurchführung anschmiegen. So ist gewährleistet, dass beim Prüfen des Schweißknotens keine oder lediglich besonders wenig Druckluft aus der Prüfkammer und entlang einer Außenseite der Kabel in die Umgebung entweicht.

Das jeweilige Kabeldurchführungselement weist mit den Kabeln des Kabelbündels korrespondierende Nuten auf, in die die Kabel einlegbar sind. Das jeweilige Kabeldurchführungselement weist Nuten auf, die mit den Kabeln des Kabelbündels korrespondieren. Das bedeutet, dass in die Nuten des jeweiligen Kabeldurchführungselements die Kabel des zu prüfenden Kabelbündels einlegbar sind. Dabei kann vorgesehen sein, dass die Nuten gegenüber einem jeweiligen Kabeldurchmesser ein Untermaß aufweisen, wodurch die Kabel beim Verstellen der Prüfvorrichtung in die Prüfstellung und unter einem elastischen Ausdehnen der Kabeldurchführungselemente in die Nuten besonders dicht eingespannt werden. Auf diese Weise lässt sich die hermetische Dichtheit der Prüfkammer noch einfacher gewährleisten, insbesondere im Bereich der Kabeldurchführung bzw. der Kabeldurchführungselemente.

Eine Anzahl der Nuten des entsprechenden Kabeldurchführungselements und eine Anzahl der Kabel des zu prüfenden Kabelbündels sind zum Beispiel gleich. Kommt es dazu, dass das zu prüfende Kabelbündel weniger Einzelkabel aufweist als Nuten in der Kabeldurchführung bzw. in den Kabeldurchführungselementen ausgebildet sind, ist die Prüfvorrichtung bestimmungsgemäß einsetzbar, indem die freibleibenden Nuten der Kabeldurchführungselemente mit entsprechend zugehörigen Blinddichtungselementen ("**Kabel**-Dummies") reversibel verschlossen werden. Im Zusammenhang mit den Nuten kann des Weiteren vorgesehen sein, dass diese einen unterschiedlichen Durchmesser haben, um ein zu prüfendes Kabelbündel zu berücksichtigen, das unterschiedlich dicke Kabel aufweist.

Die Prüfvorrichtung weist in Weiterbildung ein flächiges Dichtungselement auf, das an einem der Prüfkammerwandelemente angeordnet ist. Dadurch sind in der Prüfstellung die Prüfkammer und die Umgebung der Prüfkammer über das Dichtungselement fluidisch voneinander abgedichtet. Das flächige Dichtungselement kann dabei als Bestandteil des entsprechenden Prüfkammerwandelements ausgebildet sein. Das flächige Dichtungselement des entsprechenden Prüfkammerwandelements ist an dessen kammerseitiger Breitseite ausgebildet. Insbesondere ist bei der Prüfvorrichtung vorgesehen, dass das erste Prüfkammerwandelement, das heißt das Unterwerkzeug, an dessen kammerseitiger Breitseite das flächige Dichtungselement aufweist. Das flächige Dichtungselement ist insbesondere aus einem elastischen Material, etwa Silikon, gebildet und kann beispielsweise aus dem gleichen Material gebildet sein, wie die Kabeldurchführungselemente. Das flächige Dichtungselement bietet eine besonders zuverlässige Dichtungswirkung für die Prüfkammer, die - abgesehen von dem Druckprüfanschluss - gegen die Umgebung der Prüfkammer fluidisch dicht bzw. hermetisch abgedichtet ist.

Im Zusammenhang mit dem flächigen Dichtungselement und wie in einer weiteren Ausgestaltung der Prüfvorrichtung vorgesehen, sind das Dichtungselement und ein starrer Materialkörper des entsprechenden Prüfkammerwandelements miteinander stoffschlüssig verbunden. Insbesondere sind das entsprechende Prüfkammerwandelement und das Dichtungselement miteinander einstückig hergestellt. Das bedeutet, dass beispielsweise der Materialkörper des entsprechenden Prüfkammerwandelements einen Metallanteil und einen Kunststoffanteil aufweist, wobei das flächige Dichtungselement an der Breitseite des entsprechenden Prüfkammerwandelements und dessen zugehöriger Prüfkammeranteil gleichzeitig ausgebildet werden, etwa durch ein Fräsen. Beispielsweise herrscht zwischen dem Dichtungselement und dem entsprechenden starren Materialkörper des Prüfkammerwandelements eine stoffschlüssige Verbindung, die mittels eines Vulkanisierens erzeugt worden ist. Auf diese Weise sind das Dichtungselement und der starre Materialkörper des entsprechenden Prüfkammerwandelements besonders sicher bzw. zuverlässig aneinander befestigt, wodurch insbesondere beim Verstellen der Prüfvorrichtung mittels der Verstelleinrichtung ein unerwünschtes Verschieben bzw. Verrutschen des Dichtungselements in Bezug zu dem starren Materialkörper des entsprechenden Prüfkammerwandelements unterbleibt. Insbesondere ist vorgesehen, dass das erste Prüfkammerwandelement, das heißt das Unterwerkzeug, das Dichtungselement aufweist.

Um ein besonders einfaches bzw. aufwandsarmes Verstellen der Prüfvorrichtung zu gewährleisten, ist gemäß einer weiteren Ausgestaltung der Prüfvorrichtung vorgesehen, dass die Verstelleinrichtung einen Kniehebelmechanismus aufweist. Ein Nutzer der Prüfvorrichtung ist somit in der Lage, unter Einsatz von lediglich besonders wenig Muskelkraft zwischen der Einlegestellung und der Prüfstellung zu verstellen. Dabei weist der Kniehebelmechanismus insbesondere Mittel auf, um die Prüfvorrichtung, das heißt die Prüfkammerwandelemente, in der Prüfstellung reversibel zu arretieren. Ein solches Prinzip ist beispielsweise im Werkzeugmaschinenbereich bei Kniehebelspannern bekannt.

Einer weiteren Ausgestaltung zufolge weist die Prüfvorrichtung eine Zentriereinheit auf, die ein erstes Zentrierelement an dem ersten Prüfkammerwandelement und ein zweites Zentrierelement an dem zweiten Prüfkammerwandelement aufweist. Dabei korrespondieren die Zentrierelemente miteinander und sind unter einem Verstellen der Prüfvorrichtung in die Prüfstellung formschlüssig in Zusammenwirkung bringbar. Die Zentriereinheit ist also dazu ausgebildet, die Prüfkammerwandelemente zum einen beim Verstellen der Prüfvorrichtung in die Prüfstellung bestimmungsgemäß zum Bilden der Prüfkammer aneinander auszurichten bzw. aneinander ausgerichtet zu führen und zum anderen, um die Prüfkammerwandelemente in der Prüfstellung gegen eine Relativbewegung zu sperren. Beispielsweise kann vorgesehen sein, dass das an dem ersten Prüfkammerwandelement angeordnete, erste Zentrierelement als eine Zentrierelementaufnahme ausgebildet ist, wobei dann das an dem zweiten Prüfkammerwandelement angeordnete, zweite Zentrierelement beim Verstellen der Prüfvorrichtung in die Prüfstellung formschlüssig in das erste Zentrierelement bzw. in die Zentrierelementaufnahme eingreift. Indem die Prüfkammerwandelemente mittels der Zentriereinheit relativ zueinander ausgerichtet werden, unterstützt die Zentriereinheit das Bilden der zuverlässig dichten Prüfkammer.

Um das Einlegen des Kabelbündels in die Prüfvorrichtung besonders einfach zu gestalten bzw. zu unterstützen, weist die Prüfvorrichtung in einer Weiterbildung eine Kabelklemmvorrichtung auf, die am ersten Prüfkammerwandelement angeordnet ist und Federpaare aufweist, mittels derer die Kabel des Kabelbündels in der Einlegestellung der Prüfvorrichtung positionell halterbar sind. Das jeweilige Federpaar wird dabei unter einem Spannen in eine Aufnahmestellung gebracht, danach wird das entsprechende Kabel des Kabelbündels zwischen Einzelfedern des Federpaars gebracht und danach wird das Federpaar unter einem Entspannen desselben in eine Klemmstellung verstellt. In diesem Zustand ist das Kabel zumindest kraftschlüssig mittels des Federpaars an Ort und Stelle gehalten. Insbesondere weist die Prüfvorrichtung bzw. das erste Prüfkammerwandelement so viele Federpaare auf, wie das Kabelbündel Kabel aufweist. Es kann jedoch vorgesehen sein, dass die Kabelklemmvorrichtung bzw. das erste Prüfkammerwandelement mehr Federpaare aufweist, wodurch die Kabelklemmvorrichtung dazu ausgebildet ist, bestimmungsgemäß mit anderen Kabelbündeln in Verbindung gebracht zu werden, die mittels der Prüfvorrichtung prüfbar sind.

Die Prüfvorrichtung kann in weiterer Ausgestaltung eine Translationseinheit aufweisen, mittels derer das erste Prüfkammerwandelement in Bezug zu der Verstelleinrichtung translatorisch verschiebbar gehalten und zwischen einer Prüfposition und einer Einlegeposition verstellbar ist. Dabei sind die Verstelleinrichtung und die Translationseinheit zueinander ortsfest angeordnet. Beispielsweise können die Translationseinheit und die Verstelleinrichtung auf eine gemeinsame Grundplatte montiert sein. Bei der Translationseinheit handelt es sich zum Beispiel um eine Gleitschieneneinheit mit wenigstens einer Gleitschiene, wobei das erste Prüfkammerwandelement eine entsprechende Gleitschienenaufnahme aufweist, sodass die Gleitschiene der Translationseinheit in die Gleitschienenaufnahme und infolgedessen in das erste Prüfkammerwandelement eingreift. Ferner kann die Prüfvorrichtung in diesem Zusammenhang eine Arretierung aufweisen, mittels derer das über die Translationseinheit gelagerte Prüfkammerwandelement in der Prüfposition und/oder in der Einlegeposition gegen ein translatorisches Verschieben sperrbar bzw. arretierbar ist.

Da bei der Prüfvorrichtung generell vorgesehen ist, dass die Prüfkammerwandelemente beim Verstellen der Prüfvorrichtung mittels der Verstelleinrichtung entlang einer Hochachse der Prüfvorrichtung aufeinander zu bzw. voneinander weg bewegt werden, bietet die Translationseinheit die Möglichkeit, das erste Prüfkammerwandelement senkrecht zur Hochachse translatorisch zu verschieben, wodurch das Bestücken der Prüfvorrichtung, das heißt das Einlegen des Kabelbündels in die Prüfvorrichtung bzw. in das erste Prüfkammerwandelement, besonders einfach ist. Denn entlang der Hochrichtung der Prüfvorrichtung ist das erste Prüfkammerwandelement in dessen Einlegeposition nicht durch das zweite Prüfkammerwandelement und/oder die Verstelleinheit überdeckt. Dadurch ist ein in vorteilhafter Weise besonders großer Raum zum Manipulieren an dem ersten Prüfkammerwandelement gegeben. Dennoch ist das erste Prüfkammerwandelement besonders einfach wieder in die Prüfposition bringbar, wobei aufgrund der Translationseinheit ein genaues Ausrichten des ersten Prüfkammerwandelements zumindest in Bezug zu einer der drei Raumrichtungen unterbleiben kann. Ein Ausrichten des ersten Prüfkammerwandelements in der Prüfposition in Bezug zu zwei der Raumrichtungen kann unterbleiben, wenn die Prüfvorrichtung, insbesondere die Translationseinheit, einen Anschlag aufweist, an welchem das erste Prüfkammerwandelement in dessen Prüfposition anliegt. Dementsprechend kann ein umständliches manuelles Ausrichten des ersten Prüfkammerwandelements bzw. des Unterwerkzeugs, in Bezug zu den beiden zur Hochachse senkrecht stehenden Raumrichtungen entfallen.

Gemäß einer Weiterbildung der Prüfvorrichtung weist diese zwei erste Prüfkammerwandelemente auf, die insbesondere über die Translationseinheit in Bezug zu der Verstelleinrichtung translatorisch verschiebbar gehalten sind. Dabei sind die zwei ersten Prüfkammerwandelemente jeweils zwischen der Prüfposition und einer jeweiligen Einlegeposition translatorisch verstellbar. Es kann vorgesehen sein, dass die beiden ersten Prüfkammerwandelemente starr miteinander verbunden sind, beispielsweise einstückig miteinander ausgebildet oder anderweitig kraft-, form- und/oder stoffschlüssig miteinander verbunden sind. Hierdurch gestaltet sich ein gemeinsames Verschieben der beiden ersten Prüfkammerwandelemente besonders einfach. Alternativ können die beiden ersten Prüfkammerwandelemente unabhängig voneinander mit der Translationseinheit verbunden, das heißt translatorisch an dieser gelagert sein. Indem die Prüfvorrichtung zwei erste Prüfkammerwandelemente aufweist, gestaltet sich der Ablauf des Prüfens mehrerer Kabelbündel bzw. mehrerer Schweißknoten besonders einfach und effizient. Denn während in einem der ersten Prüfkammerwandelemente ein erstes Kabelbündel bzw. ein erster Schweißknoten auf Dichtheit überprüft wird, ist das entsprechende andere der zwei ersten Prüfkammerwandelemente in dessen Einlegeposition verstellt und kann dort gleichzeitig mit einem anderen zu prüfenden Kabelbündel bestückt werden. Eine unerwünschte Stillstandszeit der Prüfvorrichtung ist somit in vorteilhafter Weise besonders gering, wodurch die Prüfvorrichtung zum Prüfen der Dichtheit des mehrere Kabel zu dem Kabelbündel verbindenden Schweißknotens besonders effizient einsetzbar ist.

Die Erfindung betrifft des Weiteren ein Prüfset, das eine gemäß der vorstehenden Beschreibung ausgebildete Prüfvorrichtung aufweist. Um möglichst viele voneinander unterschiedlich ausgebildete Kabelbündel, insbesondere mit unterschiedlicher Anzahl von Einzelkabeln und/oder mit unterschiedlichen Durchmessern der Einzelkabel, besonders effizient auf ihre Dichtheit hin überprüfen zu können, weist das Prüfset weiter eine Vielzahl von unterschiedlich ausgebildeten Kabeldurchführungen auf, sodass das Prüfset bedarfsgerecht an das zu prüfende Kabelbündel anpassbar ist. Das bedeutet, dass das Prüfset zum Beispiel zwei Kabeldurchführungselementpaare, drei Kabeldurchführungselementpaare, etc. aufweist. Wenn zumindest einige der Kabeldurchführungselementpaare mit den weiter oben beschriebenen Nuten versehen ist, in die die Kabel des Kabelbündels einlegbar sind, kann das Prüfset weiter eine Vielzahl von mit den Kabeldurchführungen bzw. mit den Nuten korrespondierenden Blinddichtungselementen bzw. Kabel-Dummies aufweisen. Insbesondere kann vorgesehen sein, dass das Prüfset das Druckprüfgerät, das heißt beispielsweise den Lecktest-Computer, umfasst.

Merkmale, Vorteile und vorteilhafte Ausgestaltungen der erfindungsgemäßen Prüfvorrichtung sind als Merkmale, Vorteile und vorteilhafte Ausgestaltungen des erfindungsgemäßen Prüfsets anzusehen und umgekehrt.

Die Erfindung betrifft des Weiteren ein Verfahren zum Prüfen einer Dichtheit eines mehrere Kabel zu einem Kabelbündel verbindenden Schweißknotens mittels einer gemäß der vorstehenden Beschreibung ausgebildeten Prüfvorrichtung oder mittels eines gemäß der vorstehenden Beschreibung ausgebildeten Prüfsets. Werden hierin im Zusammenhang mit der Beschreibung des Verfahrens Merkmale, Vorteile und vorteilhafte Ausgestaltungen der erfindungsgemäßen Prüfvorrichtung und/oder des erfindungsgemäßen Prüfsets dargelegt, so sind diese als ebensolche anzusehen. Die erfindungsgemäße Prüfvorrichtung und/oder das erfindungsgemäße Prüfset weist Mittel zum Durchführen des erfindungsgemäßen Verfahrens auf.

Bei dem Verfahren zum Prüfen der Dichtheit des Schweißknotens wird - sofern noch nicht geschehen - die Prüfvorrichtung in die Einlegestellung verstellt und gegebenenfalls das erste Prüfkammerwandelement in die Einlegeposition verstellt. Das Kabelbündel wird dann mit der Prüfvorrichtung, insbesondere mit dem ersten Prüfkammerwandelement in Verbindung gebracht, indem der Schweißknoten in den ersten Prüfkammeranteil gebracht, beispielsweise eingelegt wird. Dabei werden die Einzelkabel des zu prüfenden Kabelbündels durch die Kabeldurchführung aus dem ersten Prüfkammeranteil herausgeführt, etwa indem die Einzelkabel auf das an dem ersten Prüfkammerwandelement angeordnete Kabeldurchführungselement gelegt werden. Beispielweise werden die Kabel des Kabelbündels in die Nuten des ersten Kabeldurchführungselements gelegt. Sofern das zu prüfende Kabelbündel weniger Einzelkabel aufweist als die Kabeldurchführungselemente Nuten für die Kabel aufweisen, ist insbesondere vorgesehen, dass in die freien Nuten der Kabeldurchführungselemente die Blinddichtungselemente bzw. Kabel-Dummies eingelegt werden.

Davor, dabei oder danach können die Einzelkabel in entsprechend zugeordnete der Federpaare der Kabelklemmvorrichtung eingespannt werden, sodass die Einzelkabel in der Einlegestellung bzw. in der Einlegeposition sicher in Position gehalten werden. Sofern die Prüfvorrichtung mit der Translationseinheit ausgerüstet ist, folgt dann das Verschieben des ersten Prüfkammerwandelements in die Prüfposition. Hiernach werden unter einem Verstellen der Prüfvorrichtung mittels der Verstelleinrichtung die Prüfkammerwandelemente, das heißt das Unterwerkzeug und das Oberwerkzeug, entlang der Hochrichtung der Prüfvorrichtung aufeinander zu bewegt, wobei - sofern vorhanden - die Prüfkammerwandelemente mittels der Zentriereinheit aneinander ausgerichtet werden. Ist die Prüfvorrichtung dann vollständig in die Prüfstellung verstellt, ist zwischen den Prüfkammerwandelementen die Prüfkammer gebildet, in der der Schweißknoten des zu prüfenden Kabelbündels angeordnet ist. Dabei ist die Prüfkammer mittels der Kabeldurchführung, insbesondere mittels der aneinander gespannten Kabeldurchführungselemente, und - sofern vorhanden - mittels des flächigen Dichtungselements hermetisch gegen die Umgebung abgedichtet. Sodann wird an den Prüfdruckanschluss das Druckprüfgerät, beispielsweise der Lecktest-Computer, angeschlossen und das Prüfprogramm des Lecktest-Computers wird gestartet.

Mittels des Druckprüfgeräts wird dabei ein Druck im Inneren der Prüfkammer gemessen und während eines Messzeitraums überwacht. Ist der Schweißknoten undicht, kommt es dazu, dass die Druckluft im Inneren der Prüfkammer durch den undichten Schweißknoten und durch die Einzelkabel des Kabelbündels aus der Prüfkammer entweicht, wodurch das Druckprüfgerät feststellt, dass der Schweißknoten undicht ist. Dabei entweicht die Druckluft aus der Prüfkammer, indem die Druckluft in den Schweißknoten und von dort aus zwischen eine jeweilige Kabelseele und eine zugehörige Kabelisolierung strömt und so in eine Umgebung der Prüfkammer strömt. Ist der Schweißknoten dahingegen dicht, entweicht keine oder lediglich besonders wenig Druckluft aus der Prüfkammer. Ein entsprechendes Ergebnis der Druckprüfung wird beispielsweise mittels einer Anzeigeeinheit des Druckprüfgeräts dem Nutzer der Prüfvorrichtung bereitgestellt, beispielsweise angezeigt. Ist die Prüfroutine durchlaufen, erfolgt ein Öffnen der Prüfkammer, indem die Prüfvorrichtung mittels ihrer Verstelleinrichtung aus der Prüfstellung in die Einlegestellung verstellt wird. Gegebenenfalls wird das erste Prüfkammerwandelement an der Translationseinheit aus der Prüfposition in die Einlegeposition translatorisch verschoben, sodass dann das geprüfte Kabelbündel bzw. der geprüfte Schweißknoten aus dem ersten Prüfkammeranteil entnommen werden kann.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine perspektivische Ansicht einer Prüfvorrichtung zum Prüfen einer Dichtheit eines mehrere Kabel zu einem Kabelbündel verbindenden Schweißknotens;
- Fig. 2: eine perspektivische Ansicht eines ersten Prüfkammerwandelements der Prüfvorrichtung;
- Fig. 3: eine perspektivische und teilweise Ansicht der Prüfvorrichtung mit einem zweiten Prüfkammerwandelement;
- Fig. 4: eine perspektivische und teilweise Ansicht der Prüfvorrichtung mit einem Prüfdruckanschluss;
- Fig. 5: eine perspektivische Ansicht des ersten Prüfkammerwandelements, wobei das zu prüfende Kabelbündel bestimmungsgemäß in das erste Prüfkammerwandelement eingelegt ist;
- Fig. 6: eine perspektivische Ansicht eines Kabeldurchführungselements;
- Fig. 7: eine perspektivische und teilweise Ansicht der Prüfvorrichtung mit einer Zentriereinheit und;
- Fig. 8: eine perspektivische und teilweise Ansicht der Prüfvorrichtung mit einer Translationseinheit.

Gleiche und funktionsgleiche Elemente sind in den Figuren mit gleichem Bezugszeichen versehen.

Im Folgenden werden eine Prüfvorrichtung 1, ein Prüfset (nicht dargestellt) sowie ein Verfahren zum Prüfen einer Dichtheit eines Schweißknotens 2 mittels der Prüfvorrichtung 1 bzw. mittels des Prüfsets gemeinsam beschrieben.

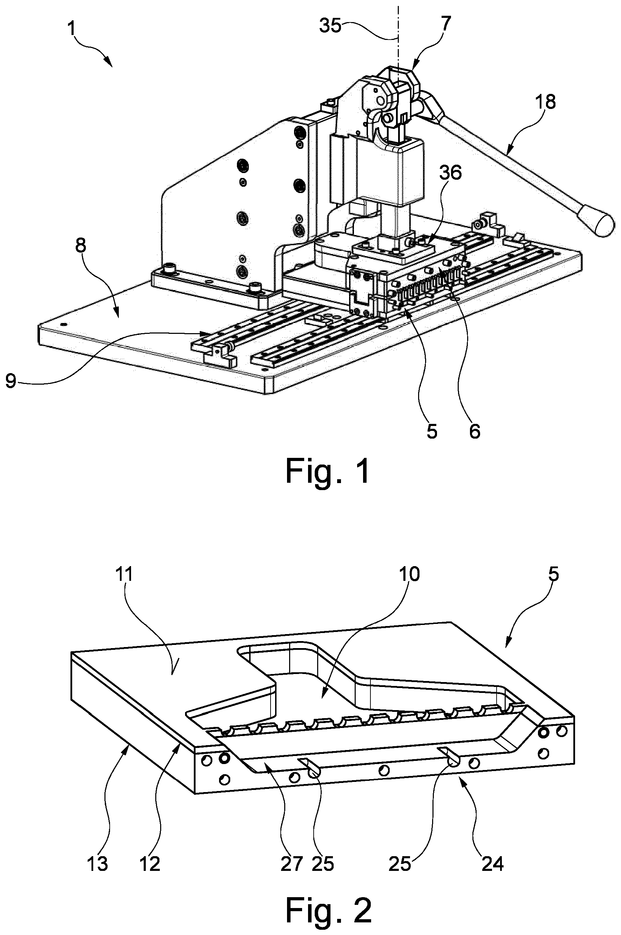

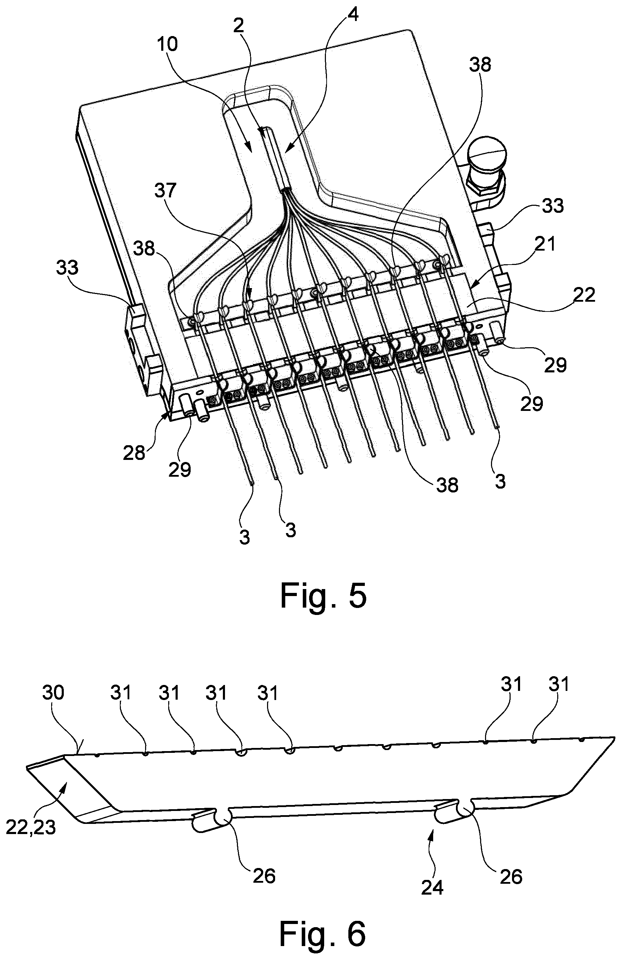

Hierzu zeigt Fig. 1 eine perspektivische Ansicht der Prüfvorrichtung 1 zum Prüfen der Dichtheit des mehrere Kabel 3 zu einem Kabelbündel 4 verbindenden Schweißknotens 2. Bei dem Verfahren zum Prüfen der Dichtheit des Schweißknotens 2 (erstmals dargestellt in Fig. 6), wird die Prüfvorrichtung 1 eingesetzt. Hierzu weist die Prüfvorrichtung 1 ein erstes Prüfkammerwandelement 5 auf, das als Unterwerkzeug bezeichnet werden kann. Ferner weist die Prüfvorrichtung 1 ein zweites Prüfkammerwandelement 6 auf, das als Oberwerkzeug bezeichnet werden kann. Die Prüfvorrichtung 1 weist weiter eine Verstelleinrichtung 7 auf, mittels derer die Prüfvorrichtung 1 zwischen einer Einlegestellung und einer Prüfstellung verstellbar ist. Vorliegend weist die Prüfvorrichtung 1 weiter eine Grundplatte 8 auf, an der die Verstelleinrichtung 7 und eine Translationseinheit 9 der Prüfvorrichtung 1 befestigt sind. Mittels der Translationseinheit 9 ist das erste Prüfkammerwandelement 5 bzw. das Unterwerkezeug translatorisch verschiebbar an der Grundplatte 8 gelagert. Das bedeutet, dass das Unterwerkzeug bzw. das erste Prüfkammerwandelement 5 in Bezug zu der Verstelleinrichtung 7 entlang der Translationseinheit 9 verschiebbar oder verstellbar ist.

In Fig. 2 ist in perspektivischer Ansicht das erste Prüfkammerwandelement 5 bzw. das Unterwerkzeug der Prüfvorrichtung 1 dargestellt, das einen ersten Prüfkammeranteil 10 aufweist. Der erste Prüfkammeranteil 10 ist an einer Breitseite 11 des ersten Prüfkammerwandelements 5 ausgebildet. Vorliegend handelt es sich bei dem ersten Prüfkammeranteil 10 um eine Materialausnehmung, die beispielsweise mittels eines spanenden Fertigungsverfahrens hergestellt worden ist. An der kammerseitigen Breitseite 11 weist das erste Prüfkammerwandelement 5 im vorliegenden Beispiel ein flächiges Dichtungselement 12 auf, das mit einem starren Materialkörper 13 des ersten Prüfkammerwandelements 5 stoffschlüssig verbunden ist. Beispielsweise ist der Materialkörper 13 des ersten Prüfkammerwandelements 5 aus einem Metall, insbesondere Aluminium, gebildet. Dahingegen ist vorgesehen, dass das flächige Dichtungselement 12, das mit dem Materialkörper 13 des ersten Prüfkammerwandelements 5 stoffschlüssig verbunden ist, aus einem weicheren Material als der Materialkörper 13 gebildet ist. Beispielsweise ist das flächige Dichtungselement 12 aus einem Kunststoff, insbesondere Silikon, gebildet. Es kann ferner vorgesehen sein, dass das flächige Dichtungselement 12 eine Shorehärte von beispielsweise 35 aufweist. Das flächige Dichtungselement 12 ist insbesondere zerstörungsfrei und reversibel elastisch verformbar.

Ferner kann vorgesehen sein, dass ein Rohteil, aus dem das erste Prüfkammerwandelement 5 gebildet wird, sowohl das Material des starren Materialkörpers 13 als auch das Material des flächigen Dichtungselements 12 aufweist. Beim Herstellen des ersten Prüfkammerwandelements 5 werden dann der erste Prüfkammeranteil 10 und das flächige Dichtungselement 12 gemeinsam miteinander hergestellt. Beispielsweise sind der starre Materialkörper, das heißt das Aluminium, und das Silikon des flächigen Dichtungselements 12 stoffschlüssig mittels Vulkanisierens miteinander verbunden, und der erste Prüfkammeranteil 10 wird in das erste Prüfkammerwandelement 5 ausgebildet, indem das Rohteil entsprechend gefräst wird.

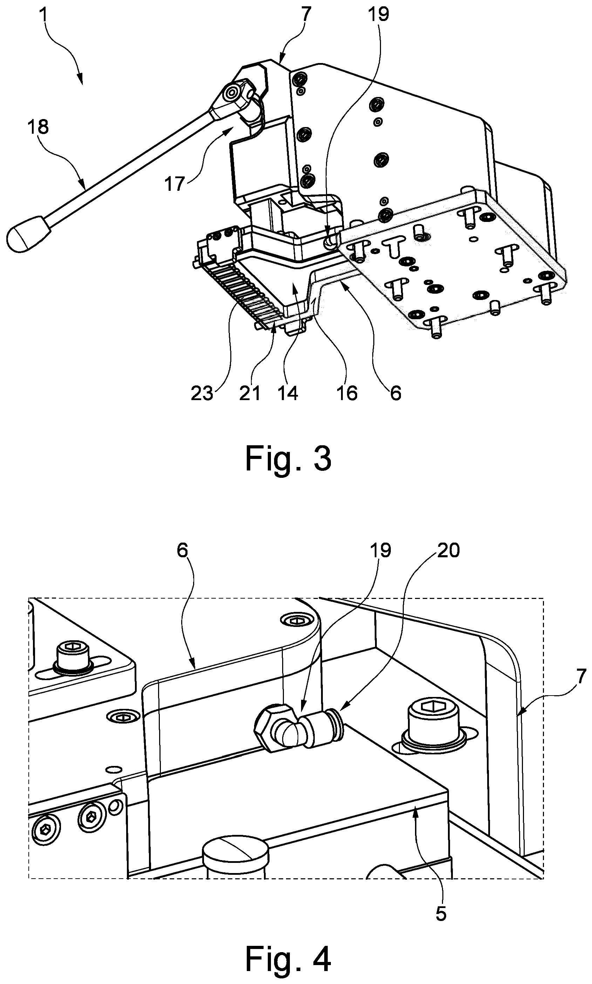

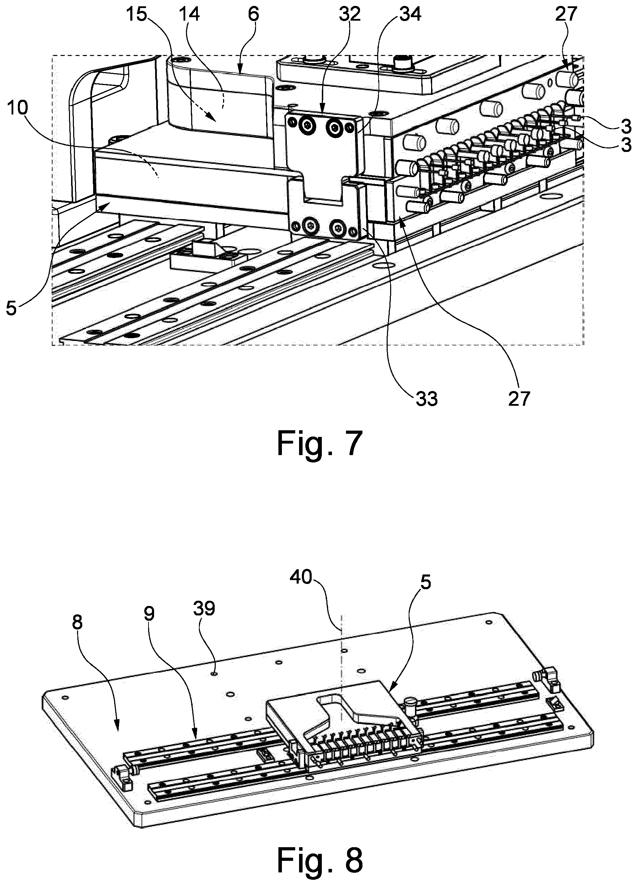

Fig. 3 zeigt in perspektivischer und teilweiser Ansicht die Prüfvorrichtung 1 mit dem zweiten Prüfkammerwandelement 6 bzw. mit dem Oberwerkzeug. Das Oberwerkzeug bzw. das zweite Prüfkammerwandelement 6 weist einen zweiten Prüfkammeranteil 14 auf, wobei die Prüfkammeranteile zum Bilden einer Prüfkammer 15 (siehe Fig. 7) miteinander korrespondieren. Der zweite Prüfkammeranteil 14 ist an einer Breitseite 16 des zweiten Prüfkammerwandelements 6 ausgebildet. Das bedeutet, dass bei der Prüfvorrichtung 1 die beiden Prüfkammeranteile 10, 14 einander zugewandt sind, indem die Breitseiten 11, 16 der Prüfkammerwandelemente 5, 6 einander zugewandt sind.

Mittels der Verstelleinrichtung 7 ist die Prüfvorrichtung 1 zwischen der Einlegestellung und der Prüfstellung verstellbar, wobei in der Einlegestellung die Prüfkammer 15 zum Einlegen oder Herausnehmen des Schweißknotens 2 geöffnet ist. Dahingegen sind in der Prüfstellung die Prüfkammerwandelemente 5, 6 und deren Prüfkammeranteile 10, 14 zueinander hin gespannt, wodurch die Prüfkammer 15 gebildet, das heißt verschlossen ist. Hierzu weist die Verstelleinrichtung 7 im vorliegenden Beispiel einen Kniehebelmechanismus 17 auf, mittels dessen ein Nutzer mit lediglich besonders geringem Muskelkraftaufwand die Prüfvorrichtung 1 zwischen der Prüfstellung und der Einlegestellung verstellen kann. Der Kniehebelmechanismus 17 weist vorliegend einen Betätigungshebel 18 auf, um den Kniehebelmechanismus 17 zu bedienen. Mittels einer Arretiereinheit (nicht dargestellt) des Kniehebelmechanismus 17 ist die Prüfvorrichtung gegen ein unbeabsichtigtes Verstellen aus der Prüfstellung arretierbar.

In Fig. 3 ist des Weiteren ein Prüfdruckanschluss 19 der Prüfvorrichtung 1 dargestellt, der mit dessen kammerseitigem Ende in den zweiten Prüfkammeranteil 14 mündet. Das bedeutet, dass der Prüfdruckanschluss 19 an dem zweiten Prüfkammerwandelement 6 angeordnet ist. In Fig. 4 ist der Prüfdruckanschluss 19 in einer perspektivischen und teilweisen Ansicht der Prüfvorrichtung 1 gezeigt. Der Prüfdruckanschluss 19 weist weiter ein anderes Ende 20 auf, das mit einem Druckprüfgerät, etwa einem Lecktest-Computer, verbindbar ist. Somit wird bei dem Verfahren zum Prüfen des Schweißknotens 2 der Lecktest-Computer mit dem Ende 20 des Prüfdruckanschlusses 19 verbunden, wodurch der Lecktest-Computer bzw. das Druckprüfgerät fluidisch mit dem zweiten Prüfkammeranteil 14 und in der Prüfstellung der Prüfvorrichtung 1 mit der Prüfkammer 15 verbunden ist.

Fig. 5 zeigt in perspektivischer Ansicht das erste Prüfkammerwandelement 5, wobei das zu prüfende Kabelbündel 4 bestimmungsgemäß in das erste Prüfkammerwandelement 5 eingelegt ist. Es ist zu erkennen, dass der zu prüfende Schweißknoten 2 zum Prüfen der Dichtheit des Schweißknotens 2 in den ersten Prüfkammeranteil 10 eingelegt wird. Die einzelnen Kabel 3, von denen in Fig. 5 nur einige mit dem entsprechenden Bezugszeichen versehen sind, werden aus dem ersten Prüfkammeranteil 10 herausgeführt. Hierzu weist die Prüfvorrichtung 1 eine Kabeldurchführung 21 auf, mittels derer die Kabel 3 des Kabelbündels 4 in/an der Prüfvorrichtung 1 örtlich fixierbar sind. In der Prüfstellung der Prüfvorrichtung 1 sind die Prüfkammer 15 und eine Umgebung der Prüfkammer 15 über die Kabeldurchführung 21 fluidisch voneinander abgedichtet, wenn der Schweißknoten 2 in der Prüfkammer 15 bzw. in dem ersten Prüfkammeranteil 10 angeordnet ist und die Kabel 3 des Kabelbündels 4 durch die Kabeldurchführung 21 aus der Prüfkammer 15 herausgeführt sind. Das bedeutet, dass zum Prüfen des Schweißknotens 2 die Kabel 3 des Kabelbündels 4 als jeweiliges Dichtungselement fungieren, wenn das Kabelbündel 4 bestimmungsgemäß, das heißt korrekt, in die Prüfvorrichtung 1 eingelegt ist und die Prüfvorrichtung 1 in die Prüfstellung verstellt ist.

Im vorliegenden Beispiel weist die Kabeldurchführung 21 ein erstes Kabeldurchführungselement 22 und ein zweites Kabeldurchführungselement 23 (siehe Fig. 3) auf. Das bedeutet, dass die Kabeldurchführung 21 im vorliegenden Beispiel aus den Kabeldurchführungselementen 22, 23 gebildet ist, zumindest dann, wenn die Prüfvorrichtung 1 bestimmungsgemäß in die Prüfstellung verstellt ist. Dabei ist das erste Kabeldurchführungselement 22 an dem ersten Prüfkammerwandelement 5 gehalten, wohingegen das zweite Kabeldurchführungselement 23 an dem zweiten Prüfkammerwandelement 6 gehalten ist. Das bedeutet, dass beim Verstellen der Prüfvorrichtung 1 zwischen der Prüfstellung und der Einlegestellung die Kabeldurchführungselemente 22, 23 mit dem entsprechenden Prüfkammerwandelement 5, 6 mitbewegt werden. Denn die Prüfvorrichtung 1 weist eine Verbindungseinheit 24 auf, mittels derer das jeweilige Kabeldurchführungselement 22, 23 und das jeweilige Prüfkammerwandelement 5, 6 reversibel lösbar formschlüssig aneinander befestigbar sind.

Vorliegend umfasst die Verbindungseinheit 24 - siehe Fig. 2 - Verbindungselementaufnahmen 25, wobei das jeweilige Kabeldurchführungselement 22, 23 - siehe Fig. 6 - Verbindungselemente 26 aufweisen. Dabei korrespondieren die Verbindungselementaufnahmen 25 und die Verbindungselemente 26 miteinander, sodass über die Verbindungseinheit 24 zwischen dem entsprechenden Prüfkammerwandelement 5, 6 und dem entsprechenden Kabeldurchführungselement 22, 23 ein Formschluss gebildet werden kann. Hierzu wird im vorliegenden Beispiel das jeweilige Kabeldurchführungselement 22, 23 in das entsprechende Prüfkammerwandelement 5, 6 eingesetzt, sodass das jeweilige Verbindungselement 26 in eine zugeordnete der Verbindungselementaufnahmen 25 eingreift. Ist das entsprechende Prüfkammerwandelement 5, 6 derart vormontiert, dass das entsprechende Prüfkammerwandelement 5, 6 und das entsprechende Kabeldurchführungselement 22, 23 formschlüssig miteinander verbunden sind, sitzt das jeweilige Kabeldurchführungselement 22, 23 in einer zugehörigen und korrespondierenden Kabeldurchführungselementaufnahme 27, die an der entsprechenden Breitseite 11, 16 des entsprechenden Prüfkammerwandelements 5, 6 ausgebildet ist. Um das entsprechende Kabeldurchführungselement 22, 23 in der entsprechenden Kabeldurchführungselementaufnahme 27 gegen ein Herausrutschen oder Herausfallen zu sichern, weist das jeweilige Prüfkammerwandelement 5, 6 im vorliegenden Beispiel eine Sicherungsplatte 28 auf, die reversibel lösbar, insbesondere werkzeuglos reversibel lösbar, die entsprechende Kabeldurchführungselementaufnahme 27 abschließt. Dies ist besonders gut in Fig. 5 zu erkennen, die das erste Kabeldurchführungselement 22 zeigt, wie es in der Kabeldurchführungselementaufnahme 27 des ersten Prüfkammerwandelements 5 sitzt und mittels der Sicherungsplatte 28 gegen ein unbeabsichtigtes Herausfallen aus der Kabeldurchführungselementaufnahme 27 gesichert ist. Hierzu ist die Sicherungsplatte 28 mit dem Materialkörper 13 des ersten Prüfkammerwandelements 5 bzw. mit einem Materialkörper des zweiten Prüfkammerwandelements 6 kraft- und/oder formschlüssig verbunden. Vorliegend umfasst die Prüfvorrichtung 1 einen Satz Rändelschrauben 29, von denen in Fig. 5 aus Übersichtlichkeitsgründen nur einige mit dem entsprechenden Bezugszeichen versehen sind. Mittels der Rändelschrauben 29 ist die Sicherungsplatte 28 an den entsprechenden Materialkörper 13 des entsprechenden Prüfkammerwandelements 5, 6 geschraubt. Hierfür weist der Materialkörper 13 des ersten Prüfkammerwandelements 5 bzw. der Materialkörper des zweiten Prüfkammerwandelements 6 mit den Rändelschrauben 29 korrespondierende Gewindelöcher auf, in die die Rändelschrauben 29 zum Herstellen einer Gewindeverbindung eingreifen oder eingreifen können.

In Fig. 6 ist eine perspektivische Ansicht des Kabeldurchführungselements 22, 23 gezeigt. Im vorliegenden Beispiel ist vorgesehen, dass die Kabeldurchführungselemente 22, 23 gleich ausgebildet sind. Die Kabeldurchführungselemente 22, 23 sind insbesondere aus einem gleichen Material hergestellt, vorliegend aus einem Silikon. Ferner handelt es sich bei den Kabeldurchführungselementen 22, 23, die als Gleichteile ausgebildet sind, um jeweilige 3D-Druckteile. An einer Oberseite 30 des jeweiligen Kabeldurchführungselements 22, 23 sind Nuten 31 ausgebildet, sodass durch die Nuten 31 jeweilige Durchgangsöffnungen durch die Kabeldurchführung 21 gebildet sind, wenn die Prüfvorrichtung 1 in die Prüfstellung verstellt ist. Dabei korrespondieren die Nuten 31 und infolgedessen die Durchgangsöffnungen durch die Kabeldurchführung 21 mit den Kabeln 3 des zu prüfenden Kabelbündels 4. Hierdurch schmiegen sich die Kabeldurchführungselemente 22, 23 unter einem Verstellen der Prüfvorrichtung 1 in die Prüfstellung besonders innig und dicht an die Kabel 3 des zu prüfenden Kabelbündels 4 an. Weist das Kabelbündel 4 weniger Kabel 3 auf, als die Kabeldurchführung 21 Durchgangsöffnungen aufweist, ist zum Prüfen des Schweißknotens 2 vorgesehen, dass in die freien Durchgangsöffnungen bzw. in die freien Nuten 31 Blinddichtungselemente ("Kabel-Dummies"; nicht dargestellt) eingelegt werden.

In der Prüfstellung der Prüfvorrichtung 1 und wenn in die Prüfkammer 15 bestimmungsgemäß der Schweißknoten 2 des zu prüfenden Kabelbündels 4 eingelegt ist, werden über die Nuten 31 bzw. über die Durchgangsöffnungen durch die Kabeldurchführung 21 hindurch die Kabel 3 des zu prüfenden Kabelbündels 4 geführt, wobei die Kabel 3 als Dichtungselemente für die Prüfkammer 15 dienen. Mit anderen Worten ist vorgesehen, dass in der Prüfstellung die Nuten 31 der Kabeldurchführungselemente 22, 23 durch die Kabel 3 und/oder durch die Blinddichtungselemente abgedichtet sind. Die Kabeldurchführungselemente 22, 23 sind unter einem Verstellen der Prüfvorrichtung 1 in die Prüfstellung elastisch reversibel aneinander spannbar. Das bedeutet, dass ein Material, vorliegend das Silikon, der Kabeldurchführungselemente 22, 23 derart gewählt ist, dass die Kabeldurchführungselemente 22, 23 zerstörungsfrei aneinander angepresst und dadurch verformt werden können, wobei die Kabeldurchführungselemente 22, 23 unter einem Verstellen der Prüfvorrichtung 1 in die Einlegestellung wieder entspannt werden und dabei sich wieder in ihre Ursprungsform zurückverformen.

In Fig. 7 ist eine perspektivische und teilweise Ansicht der Prüfvorrichtung 1 gezeigt, wobei eine Zentriereinheit 32 der Prüfvorrichtung 1 besonders gut zu erkennen ist. Die Zentriereinheit 32 weist ein erstes Zentrierelement 33 und ein zweites Zentrierelement 34 auf. Das erste Zentrierelement 33, das im vorliegenden Beispiel als eine Zentrierelementaufnahme ausgebildet ist, ist an dem ersten Prüfkammerwandelement 5 ausgebildet, wohingegen das zweite Zentrierelement 34, das vorliegend als ein Zentrierriegel ausgebildet ist, an dem zweiten Prüfkammerwandelement 6 angeordnet ist. Dabei korrespondieren die Zentrierelemente 33, 34, vorliegend die Zentrierelementaufnahme und der Zentrierriegel, miteinander, sodass unter einem Verstellen der Prüfvorrichtung 1 in die Prüfstellung die Zentrierelemente 33, 34 miteinander formschlüssig in Zusammenwirkung bringbar sind. Wird die Prüfvorrichtung 1 beispielsweise aus der Einlegestellung in die Prüfstellung verstellt, greift der Zentrierriegel, also das zweite Zentrierelement 34, in die Zentrierelementaufnahme, das heißt in das zweite Zentrierelement 34, ein. Hierdurch werden die Prüfkammerwandelemente 5, 6 unter dem Verstellen der Prüfvorrichtung 1 aneinander ausgerichtet, wobei die Zentrierelemente 33, 34 so lange bzw. so weit aneinander abgleiten, bis die Prüfvorrichtung 1 vollständig in die Prüfstellung verstellt ist. In diesem Zustand wirken die Zentrierelemente 33, 34 formschlüssig miteinander zusammen, wodurch ein Ausrücken eines der Prüfkammerwandelemente 5, 6 in Bezug zu dem entsprechend anderen der Prüfkammerwandelemente 5, 6 verhindert ist.

Unter erneuter Bezugnahme auf Fig. 1 ist zu erkennen, dass die Prüfkammerwandelemente 5, 6 beim Verstellen der Prüfvorrichtung 1 zwischen der Einlegestellung und der Prüfstellung entlang einer Verstellrichtung 35 zueinander hinbewegt oder voneinander wegbewegt werden. Dabei ist die Prüfvorrichtung 1, insbesondere die Verstelleinrichtung 7, derart ausgebildet, dass die Verstellrichtung 35 und eine vertikale Raumachse parallel zueinander sind. An einem Fuß 36 ist das zweite Prüfkammerwandelement 6 befestigt, beispielsweise mit dem Fuß 36 verschraubt.

Die Prüfvorrichtung 1 weist vorliegend eine Kabelklemmvorrichtung 37 auf, die beispielsweise in Fig. 5 erkennbar ist. Die Kabelklemmvorrichtung 37 ist im vorliegenden Beispiel am ersten Prüfkammerwandelement 5 angeordnet und weist Federpaare 38 auf, mittels derer die Kabel 3 des Kabelbündels 4 in der Einlegestellung der Prüfvorrichtung 1 positionell haltbar sind. Die Federpaare 38 der Kabelklemmvorrichtung 37 sind außerhalb des ersten Prüfkammeranteils 10 und/oder innerhalb des ersten Prüfkammeranteils 10 angeordnet. Zum Einlegen des Kabelbündels 4 in die Prüfvorrichtung 1 wird der Schweißknoten 2 in den ersten Prüfkammeranteil 10 eingelegt, wobei die Einzelkabel 3 des Kabelbündels 4 separat voneinander in jeweilige Federpaare 38 der Kabelklemmvorrichtung 37 eingesetzt werden. Hierbei werden die Kabel 3 unter einem Spannen des jeweiligen Federpaars 38 zwischen die Einzelfedern des jeweiligen Federpaars 38 platziert, wobei die Einzelfedern des entsprechenden Federpaars 38 voneinander weg gespannt werden. Hierdurch ist das jeweilige Kabel 3 des Kabelbündels 4 aufgrund der Federkraft des Federpaars 38 in diesem gehalten. Von den Federpaaren 38 sind in Fig. 5 aus Übersichtlichkeitsgründen nur einige wenige mit dem entsprechenden Bezugszeichen versehen. Je Kabel 3 kann die Kabelklemmvorrichtung zwei Federpaare 38 aufweisen, wovon eines außerhalb des ersten Prüfkammeranteils 10 und eines innerhalb des ersten Prüfkammeranteils 10 angeordnet ist. Hierdurch ist das entsprechende Kabel 3 entlang seiner Längserstreckung einmal innerhalb des ersten Prüfkammeranteils 10 und einmal außerhalb des ersten Prüfkammeranteils 10 positionell gesichert oder sicherbar.

Fig. 8 zeigt eine perspektivische und teilweise Ansicht der Prüfvorrichtung 1 mit der Translationseinheit 9, wobei von der Prüfvorrichtung 1 lediglich die Grundplatte 8, die Translationseinheit 9 sowie das erste Prüfkammerwandelement 5 dargestellt sind. Wie bereits dargelegt ist das erste Prüfkammerwandelement 5 in Bezug zu der Verstelleinrichtung 7 entlang der Translationseinheit 9 translatorisch verschiebbar. Dies ist in Fig. 8 anhand der Befestigungslöcher 39 zu erkennen, mittels derer die Verstelleinrichtung 7 an der Grundplatte 8 befestigt ist. Das erste Prüfkammerwandelement 5 ist also entlang der Translationseinheit 9 zwischen einer Prüfposition und einer Einlegeposition verstellbar, wobei in der Prüfposition das erste Prüfkammerwandelement 5 genau unterhalb des zweiten Prüfkammerwandelements 6 angeordnet ist. In diesem Fall fallen eine Hochachse 40 des ersten Prüfkammerwandelements 5 und die Verstellrichtung 35 zusammen. Dahingehen sind in der Einlegeposition des zweiten

Prüfkammerwandelements 5 - das heißt wenn dieses entlang der Translationseinheit 9 aus der Prüfposition ausgerückt ist - die Verstellrichtung 35 und die Hochachse 40 zwar zueinander parallel, jedoch schneiden sich die Hochachse 40 und die Verstellrichtung 35 nicht. Insbesondere ist das erste Prüfkammerwandelement 5 in der Einlegeposition so weit entlang der Translationseinheit 9 von der Verstelleinrichtung 7 entfernt, dass die gesamte Breitseite 11 des ersten Prüfkammerwandelements 5 entlang der vertikalen, das heißt von oben, nicht von dem zweiten Prüfkammerwandelement 6 verdeckt oder überdeckt ist. So ergibt sich über dem in der Einlegeposition angeordneten ersten Prüfkammerwandelement 5 ein besonders großer Raum, wodurch das Einlegen des zu prüfenden Kabelbündels 4 in das erste Prüfkammerwandelement 5 besonders einfach ist.

Nicht dargestellt ist wenigstens ein weiteres erstes Prüfkammerwandelement 5 der Prüfvorrichtung 1, wobei dann die zwei ersten Prüfkammerwandelemente 5 in Bezug zu der Verstelleinrichtung 7 translatorisch verschiebbar mittels der Translationseinheit 9 gehalten sind. Somit kann die Prüfvorrichtung 1 zumindest zwei erste Prüfkammerwandelemente 5 aufweisen, die jeweils zwischen der Prüfposition und einer jeweiligen Einlegeposition translatorisch verstellbar sind. Das bedeutet, dass wechselweise eines der beiden ersten Prüfkammerwandelemente 5 in die Prüfposition verstellt werden kann, wobei das entsprechend andere der zwei ersten Prüfkammerwandelemente 5 in der jeweils zugeordneten Einlegeposition angeordnet sein kann. Ist die Prüfvorrichtung 1 im Raum bestimmungsgemäß angeordnet, beispielsweise über die Grundplatte 8 auf einem Untergrund aufgestellt und steht ein Nutzer der Prüfvorrichtung 1 auf Seiten des Betätigungshebels 18, wobei die Translationseinheit 9 quer vor dem Nutzer verläuft, lässt sich beispielsweise eine der beiden ersten Prüfkammerwandelemente 5 in eine rechte Einlegeposition verstellen, wohingegen das andere der beiden ersten Prüfkammerwandelemente 5 in eine linke Einlegeposition verstellbar ist. Wahlweise das in der rechten oder in der linken Einlegeposition angeordnete der beiden ersten Prüfkammerwandelemente 5 lässt sich dann in die Prüfposition verstellen. Auf diese Weise kann ein erstes Kabelbündel 4 mittels der Prüfvorrichtung 1 geprüft werden, wobei gleichzeitig ein weiteres Kabelbündel 4 (nicht dargestellt) in das entsprechend andere der beiden ersten Prüfkammerwandelemente 5 eingelegt werden kann.

Das Prüfset umfasst die Prüfvorrichtung 1 sowie eine Vielzahl von unterschiedlich ausgebildeten Kabeldurchführungen 21, das heißt eine Vielzahl von unterschiedlich ausgebildeten Kabeldurchführungselementpaaren, wobei das jeweilige Kabeldurchführungselementpaar jeweils zwei gleich ausgebildete Kabeldurchführungselemente 22, 23 umfasst. Des Weiteren kann das Prüfset eine Vielzahl von mit den Kabeldurchführungen 21 korrespondierende Blinddichtungselemente oder Kabel-Dummies aufweisen. Ferner kann das Prüfset das Druckprüfgerät, etwa den Lecktest-Computer, umfassen.

Um mittels der Prüfvorrichtung 1 oder mittels des Prüfsets die Dichtheit des mehrere Kabel 3 zu dem Kabelbündel 4 verbindenden Schweißknotens 2 zu prüfen, wird die Prüfvorrichtung 1 - sofern noch nicht geschehen - aus der Prüfstellung in die Einlegestellung verstellt. Dadurch wird die zwischen den Prüfkammerwandelementen 5, 6 gebildete Prüfkammer 15 frei gegeben, sodass in die Prüfkammer 15, insbesondere in den ersten Prüfkammeranteil 10 der zu prüfende Schweißknoten 2 eingelegt werden kann. Dabei werden die Einzelkabel 3 des Kabelbündels 4 durch die Kabeldurchführung 21 hindurch aus dem ersten Prüfkammeranteil 10 herausgeführt, beispielsweise indem die Kabel 3 in die Nuten 31 des ersten Kabeldurchführungselements 22 eingelegt werden. Zum besonders einfachen Einlegen des Kabelbündels 4 in die Prüfvorrichtung 1 kann vorgesehen sein, dass zunächst das erste Prüfkammerwandelement 5 entlang der Translationseinheit 9 in die entsprechende Einlegeposition verstellt wird, um das erste Prüfkammerwandelement 5 nach dem Einlegen des Kabelbündels 4 bzw. des Schweißknotens 2 entlang der Translationseinheit 9 (wieder) in die Prüfposition zu verstellen.

Beim Einlegen des Kabelbündels 4 in das erste Prüfkammerwandelement 5 kann des Weiteren vorgesehen sein, dass die Kabel 3 in die Kabelklemmvorrichtung 37 bzw. Federpaare 38 eingelegt bzw. eingespannt werden, um die Kabel 3 besonders sicher in Position zu halten. Hiernach wird - insbesondere mittels des Betätigungshebels 18 - der Kniehebelmechanismus 17 betätigt, wodurch die Prüfvorrichtung 1 in die Prüfstellung verstellt wird. Dabei wird im vorliegenden Beispiel das zweite Prüfkammerwandelement 6 entlang der Verstellrichtung 35 auf das erste Prüfkammerwandelement 5 zu bewegt, wobei insbesondere die Zentrierelemente 33, 34 der Zentriereinheit 32 ineinandergreifen und aneinander abgleiten. Dabei berühren sich die Breitseiten 11, 16 bzw. die Prüfkammerwandelemente 5, 6, wobei das flächige Dichtungselement 12 elastisch verformt und dadurch gespannt wird. In diesem Zustand ist durch die Prüfkammeranteile 10, 14 die Prüfkammer 15 gebildet und geschlossen und gegen eine Umgebung der Prüfkammer 15 abgedichtet.

An/in dem mit dem Ende 20 des Prüfdruckanschlusses 19 verbundenen Druckprüfgerät, beispielsweise dem Lecktest-Computer, wird dann die Prüfroutine zum Prüfen der Dichtheit des Schweißknotens 2 gestartet und durchgeführt. Weist die Prüfvorrichtung 1 zwei erste Prüfkammerwandelemente 5 auf, kann während der Prüfroutine das freie erste Prüfkammerwandelement 5 mit einem weiteren Kabelbündel 4 bzw. einem weiteren Schweißknoten 2 bestückt werden. Auf diese Weise lässt sich die Zeit, während derer die Prüfroutine abläuft, besonders effizient und ökonomisch günstig nutzen. Ist das Prüfen des entsprechenden Kabelbündels 4 bzw. des entsprechenden Schweißknotens 2 abgeschlossen, wird die Prüfvorrichtung 1 mittels eines Betätigens des Betätigungshebels 18 aus der Prüfstellung in die Einlegestellung verstellt und ggf. das entsprechende erste Prüfkammerwandelement 5 aus der Prüfposition ausgerückt, insbesondere indem das entsprechende erste Prüfkammerwandelement 5 entlang der Translationseinheit 9 nach rechts oder nach links verschoben wird. Hiernach kann das geprüfte Kabelbündel 4 mit dem dichten Schweißknoten 2 einer Produktionslinie zugeführt werden, da das Verfahren zum Prüfen der Dichtheit des Schweißknotens 2 ein zerstörungsfreies Verfahren ist.

Insgesamt zeigt die Erfindung, dass durch die Prüfvorrichtung 1, das Prüfset und das Verfahren zum Prüfen der Dichtheit des Schweißknotens 2 eine (jeweilige) Möglichkeit zum besonders effizienten und insbesondere zerstörungsfreien Prüfen der Dichtheit des Schweißknotens 2 geschaffen ist.

### BEZUGSZEICHENLISTE

- 1: Prüfvorrichtung
- 2: Schweißknoten
- 3: Kabel
- 4: Kabelbündel
- 5: erstes Prüfkammerwandelement
- 6: zweites Prüfkammerwandelement
- 7: Verstelleinrichtung
- 8: Grundplatte
- 9: Translationseinheit
- 10: erster Prüfkammeranteil
- 11: Breitseite
- 12: flächiges Dichtungselement
- 13: Materialkörper
- 14: zweiter Prüfkammeranteil
- 15: Prüfkammer
- 16: Breitseite
- 17: Kniehebelmechanismus
- 18: Betätigungshebel
- 19: Prüfdruckanschluss
- 20: Ende
- 21: Kabeldurchführung
- 22: Kabeldurchführungselement
- 23: Kabeldurchführungselement
- 24: Verbindungseinheit
- 25: Verbindungselementaufnahme
- 26: Verbindungselement
- 27: Kabeldurchführungselementaufnahme
- 28: Sicherungsplatte
- 29: Rändelschraube
- 30: Oberseite
- 31: Nut
- 32: Zentriereinheit
- 33: erstes Zentrierelement
- 34: zweites Zentrierelement
- 35: Verstellrichtung
- 36: Fuß
- 37: Kabelklemmvorrichtung
- 38: Federpaar
- 39: Befestigungsloch
- 40: Hochachse

## Patentansprüche

1. Prüfvorrichtung (1) zum Prüfen einer Dichtheit eines mehrere Kabel (3) zu einem Kabelbündel (4) verbindenden Schweißknotens (2), mit
- einem ersten Prüfkammerwandelement (5), das an dessen kammerseitiger Breitseite (11) einen ersten Prüfkammeranteil (10) aufweist;
- einem zweiten Prüfkammerwandelement (6), das an dessen kammerseitiger Breitseite (16) einen zweiten Prüfkammeranteil (14) aufweist, wobei die Prüfkammerwandelemente (5, 6) und deren Prüfkammeranteile (10, 14) einander zugewandt sind und zum Bilden einer Prüfkammer (15) miteinander korrespondieren;
- einer Verstelleinrichtung (7), mittels derer die Prüfvorrichtung (1) zwischen einer Einlegestellung, in der die Prüfkammer (15) zum Einlegen oder Herausnehmen des Schweißknotens (2) geöffnet ist, und einer Prüfstellung, in welcher die Prüfkammerwandelemente (5, 6) und deren Prüfkammeranteile (10, 14) zueinander hin gespannt sind, wodurch die Prüfkammer (15) geschlossen ist, verstellbar ist;
- einem Prüfdruckanschluss (19), der an dessen kammerseitigem Ende in einen der Prüfkammeranteile (10, 14) mündet und dessen anderes Ende (20) mit einem Druckprüfgerät fluidisch verbindbar ist;
- einer mit den Kabeln (3) des Kabelbündels (4) korrespondierenden Kabeldurchführung (21), die dazu ausgebildet ist, die Kabel (3) in der Prüfstellung zu fixieren;
wobei in der Prüfstellung die Prüfkammer (15) und eine Umgebung der Prüfkammer (15) über die Kabeldurchführung (21) fluidisch voneinander abgedichtet sind, wenn der Schweißknoten (2) in der Prüfkammer (15) angeordnet ist und die Kabel (3) des Kabelbündels (4) durch die Kabeldurchführung (21) aus der Prüfkammer (15) herausgeführt sind,
wobei die Kabeldurchführung (21) aus einem an dem ersten Prüfkammerwandelement (5) gehaltenen, ersten Kabeldurchführungselement (22) und einem an dem zweiten Prüfkammerwandelement (6) gehaltenen, zweiten Kabeldurchführungselement (23) gebildet ist,
**dadurch gekennzeichnet, dass** das jeweilige Kabeldurchführungselement (22, 23) mit den Kabeln (3) des Kabelbündels (4) korrespondierende Nuten (31) aufweist, in die die Kabel (3) einlegbar sind.

2. Prüfvorrichtung (1) nach Anspruch 1,
**gekennzeichnet durch**
eine Verbindungseinheit (24), mittels derer das jeweilige Kabeldurchführungselement (22, 23) und das jeweilige Prüfkammerwandelement (5, 6) reversibel lösbar formschlüssig aneinander befestigbar sind.

3. Prüfvorrichtung (1) nach Anspruch 1 oder 2,
**dadurch gekennzeichnet, dass**
das erste Kabeldurchführungselement (22) und das zweite Kabeldurchführungselement (23) gleich ausgebildet sind.

4. Prüfvorrichtung (1) nach einem der Ansprüche 1 bis 3,
**dadurch gekennzeichnet, dass**
die Kabeldurchführungselemente (22, 23) unter einem Verstellen der Prüfvorrichtung (1) in die Prüfstellung elastisch reversibel aneinander spannbar sind.

5. Prüfvorrichtung (1) nach einem der vorhergehenden Ansprüche,
**dadurch gekennzeichnet, dass**
eines der Prüfkammerwandelemente (5, 6) an dessen kammerseitiger Breitseite (11, 16) ein flächiges Dichtungselement (12) aufweist, sodass in der Prüfstellung die Prüfkammer (15) und die Umgebung der Prüfkammer (15) über das Dichtungselement (12) fluidisch voneinander abgedichtet sind.

6. Prüfvorrichtung (1) nach Anspruch 5,
**dadurch gekennzeichnet, dass**
das Dichtungselement (12) und ein starrer Materialkörper (13) des entsprechenden Prüfkammerwandelements (5, 6) miteinander stoffschlüssig verbunden sind.

7. Prüfvorrichtung (1) nach einem der vorhergehenden Ansprüche,
**dadurch gekennzeichnet, dass**
die Verstelleinrichtung (7) einen Kniehebelmechanismus (17) aufweist.

8. Prüfvorrichtung (1) nach einem der vorhergehenden Ansprüche,
**gekennzeichnet durch**
eine Zentriereinheit (32), die ein erstes Zentrierelement (33) an dem ersten Prüfkammerwandelement (5) und ein zweites Zentrierelement (34) an dem zweiten Prüfkammerwandelement (6) aufweist, wobei die Zentrierelemente (33, 34) miteinander korrespondieren und unter einem Verstellen der Prüfvorrichtung (1) in deren Prüfstellung formschlüssig in Zusammenwirkung bringbar sind.

9. Prüfvorrichtung (1) nach einem der vorhergehenden Ansprüche,
**gekennzeichnet durch**
eine Kabelklemmvorrichtung (37), die am ersten Prüfkammerwandelement (5) angeordnet ist und Federpaare (38) aufweist, mittels derer die Kabel (3) des Kabelbündels (4) in der Einlegestellung der Prüfvorrichtung (1) positionell halterbar sind.

10. Prüfvorrichtung (1) nach einem der vorhergehenden Ansprüche,
**gekennzeichnet durch**
eine Translationseinheit (9), mittels derer das erste Prüfkammerwandelement (5) in Bezug zu der Verstelleinrichtung (7) translatorisch verschiebbar gehalten und zwischen einer Prüfposition und einer Einlegeposition verstellbar ist, wobei die Verstelleinrichtung (7) und die Translationseinheit (9) zueinander ortsfest angeordnet sind.

11. Prüfvorrichtung (1) nach Anspruch 10,
**dadurch gekennzeichnet, dass**
über die Translationseinheit (9) zwei erste Prüfkammerwandelemente (5) in Bezug zu der Verstelleinrichtung (7) translatorisch verschiebbar gehalten sind, die jeweils zwischen der Prüfposition und einer jeweiligen Einlegeposition translatorisch verstellbar sind.

12. Prüfset mit einer nach einem der Ansprüche 2 bis 11 ausgebildeten Prüfvorrichtung (1) und mit einer Vielzahl von unterschiedlich ausgebildeten Kabeldurchführungen (21).

13. Verfahren zum Prüfen einer Dichtheit eines mehrere Kabel (3) zu einem Kabelbündel (4) verbindenden Schweißknotens (2) mittels einer nach einem der Ansprüche 1 bis 11 ausgebildeten Prüfvorrichtung (1) oder mittels eines nach Anspruch 12 ausgebildeten Prüfsets.

## Claims

1. Testing device (1) for testing the tightness of a weld joint (2) connecting several cables (3) to a cable bundle (4), comprising
- a first test chamber wall element (5) which has a first test chamber part (10) on its chamber-side broad side (11);
- a second test chamber wall element (6) which has a second test chamber part (14) on its chamber-side broad side (16), wherein the test chamber wall elements (5, 6) and their test chamber parts (10, 14) face each other and correspond with each other to form a test chamber (15);
- an adjustment device (7) by means of which the testing device (1) is adjustable between an insertion position, in which the test chamber (15) is open for inserting or removing the weld joint (2), and a test position, in which the test chamber wall elements (5, 6) and their test chamber parts (10, 14) are tensioned towards each other, whereby the test chamber (15) is closed;
- a test pressure connection (19) which opens at its chamber-side end into one of the test chamber parts (10, 14) and whose other end (20) can be fluidically connected to a pressure testing device;
- a cable feed-through (21) corresponding to the cables (3) of the cable bundle (4), which is designed to fix the cables (3) in the test position;
wherein in the test position the test chamber (15) and an environment of the test chamber (15) are fluidically sealed from each other via the cable feed-through (21) when the weld joint (2) is arranged in the test chamber (15) and the cables (3) of the cable bundle (4) are led out of the test chamber (15) through the cable feed-through (21),
wherein the cable feed-through (21) is formed from a first cable feed-through element (22) held on the first test chamber wall element (5) and a second cable feed-through element (23) held on the second test chamber wall element (6),
**characterized in that**
each cable feed-through element (22, 23) has grooves (31) corresponding to the cables (3) of the cable bundle (4) into which the cables (3) can be inserted.

2. Testing device (1) according to claim 1,
**characterized by**
a connecting unit (24) by means of which the respective cable feed-through element (22, 23) and the respective test chamber wall element (5, 6) can be detachably fastened to each other in a form-fitting manner.

3. Testing device (1) according to claim 1 or 2,
**characterized in that**
the first cable feed-through element (22) and the second cable feed-through element (23) are designed identically.

4. Testing device (1) according to one of claims 1 to 3,
**characterized in that**
the cable feed-through elements (22, 23) can be elastically tensioned against each other in a reversible manner when the testing device (1) is adjusted to the test position.

5. Testing device (1) according to one of the preceding claims,
**characterized in that**
one of the test chamber wall elements (5, 6) has a flat sealing element (12) on its chamber-side broad side (11, 16), so that in the test position the test chamber (15) and the environment of the test chamber (15) are fluidically sealed from each other via the sealing element (12).

6. Testing device (1) according to claim 5,
**characterized in that**
the sealing element (12) and a rigid material body (13) of the corresponding test chamber wall element (5, 6) are materially bonded to each other.

7. Testing device (1) according to one of the preceding claims,
**characterized in that**
the adjustment device (7) has a toggle lever mechanism (17).

8. Testing device (1) according to one of the preceding claims,
**characterized by**
a centering unit (32) which has a first centering element (33) on the first test chamber wall element (5) and a second centering element (34) on the second test chamber wall element (6), wherein the centering elements (33, 34) correspond with each other and can be brought into form-fitting interaction with each other when the testing device (1) is adjusted to its test position.

9. Testing device (1) according to one of the preceding claims,
**characterized by**
a cable clamping device (37) which is arranged on the first test chamber wall element (5) and has pairs of springs (38) by means of which the cables (3) of the cable bundle (4) can be held in position in the insertion position of the testing device (1).

10. Testing device (1) according to one of the preceding claims,
**characterized by**
a translation unit (9) by means of which the first test chamber wall element (5) is held translationally displaceable relative to the adjustment device (7) and is adjustable between a test position and an insertion position, wherein the adjustment device (7) and the translation unit (9) are arranged stationary relative to each other.

11. Testing device (1) according to claim 10,
**characterized in that**
two first test chamber wall elements (5) are held translationally displaceable relative to the adjustment device (7) via the translation unit (9), each of which is translationally adjustable between the test position and a respective insertion position.

12. Test set comprising a testing device (1) according to one of claims 2 to 11 and a plurality of differently designed cable feed-throughs (21).

13. Method for testing the tightness of a weld joint (2) connecting several cables (3) to a cable bundle (4) by means of a testing device (1) according to one of claims 1 to 11 or by means of a test set according to claim 12.

## Revendications

1. Dispositif de test (1) pour tester l'étanchéité d'un noeud de soudure (2) reliant plusieurs câbles (3) à un faisceau de câbles (4), comprenant
- un premier élément de paroi de chambre de test (5), qui présente une première partie de chambre de test (10) sur son côté large côté chambre (11);
- un deuxième élément de paroi de chambre de test (6), qui présente une deuxième partie de chambre de test (14) sur son côté large côté chambre (16), les éléments de paroi de chambre de test (5, 6) et leurs parties de chambre de test (10, 14) se faisant face et correspondant l'un à l'autre pour former une chambre de test (15);
- un dispositif de réglage (7), au moyen duquel le dispositif de test (1) est réglable entre une position d'insertion, dans laquelle la chambre de test (15) est ouverte pour insérer ou retirer le noeud de soudure (2), et une position de test, dans laquelle les éléments de paroi de chambre de test (5, 6) et leurs parties de chambre de test (10, 14) sont tendus l'un vers l'autre, de sorte que la chambre de test (15) est fermée;
- un raccord de pression de test (19), qui débouche à son extrémité côté chambre dans l'une des parties de chambre de test (10, 14) et dont l'autre extrémité (20) peut être reliée fluidiquement à un appareil de test de pression;
- un passage de câble (21) correspondant aux câbles (3) du faisceau de câbles (4), qui est conçu pour fixer les câbles (3) en position de test;
dans la position de test, la chambre de test (15) et l'environnement de la chambre de test (15) sont fluidiquement étanches l'un par rapport à l'autre par le passage de câble (21) lorsque le noeud de soudure (2) est disposé dans la chambre de test (15) et que les câbles (3) du faisceau de câbles (4) sont conduits hors de la chambre de test (15) par le passage de câble (21),
le passage de câble (21) est constitué d'un premier élément de passage de câble (22) maintenu sur le premier élément de paroi de chambre de test (5) et d'un deuxième élément de passage de câble (23) maintenu sur le deuxième élément de paroi de chambre de test (6),
**caractérisé en ce que**
chaque élément de passage de câble (22, 23) présente des rainures (31) correspondant aux câbles (3) du faisceau de câbles (4), dans lesquelles les câbles (3) peuvent être insérés.

2. Dispositif de test (1) selon la revendication 1,
**caractérisé par**
une unité de connexion (24), au moyen de laquelle chaque élément de passage de câble (22, 23) et chaque élément de paroi de chambre de test (5, 6) peuvent être fixés l'un à l'autre de manière réversible et positive.

3. Dispositif de test (1) selon la revendication 1 ou 2,
**caractérisé en ce que**
le premier élément de passage de câble (22) et le deuxième élément de passage de câble (23) sont identiques.

4. Dispositif de test (1) selon l'une des revendications 1 à 3,
**caractérisé en ce que**
les éléments de passage de câble (22, 23) peuvent être tendus de manière élastique et réversible l'un contre l'autre lors du réglage du dispositif de test (1) en position de test.

5. Dispositif de test (1) selon l'une des revendications précédentes,
**caractérisé en ce que**
l'un des éléments de paroi de chambre de test (5, 6) présente un élément d'étanchéité plat (12) sur son côté large côté chambre (11, 16), de sorte que dans la position de test, la chambre de test (15) et l'environnement de la chambre de test (15) sont fluidiquement étanches l'un par rapport à l'autre par l'élément d'étanchéité (12).

6. Dispositif de test (1) selon la revendication 5,
**caractérisé en ce que**
l'élément d'étanchéité (12) et un corps de matériau rigide (13) de l'élément de paroi de chambre de test correspondant (5, 6) sont reliés de manière homogène.

7. Dispositif de test (1) selon l'une des revendications précédentes,
**caractérisé en ce que**
le dispositif de réglage (7) présente un mécanisme à levier à genou (17).

8. Dispositif de test (1) selon l'une des revendications précédentes,
**caractérisé par**
une unité de centrage (32), qui présente un premier élément de centrage (33) sur le premier élément de paroi de chambre de test (5) et un deuxième élément de centrage (34) sur le deuxième élément de paroi de chambre de test (6), les éléments de centrage (33, 34) correspondant l'un à l'autre et pouvant être mis en interaction de manière positive lors du réglage du dispositif de test (1) en position de test.

9. Dispositif de test (1) selon l'une des revendications précédentes,
**caractérisé par**
un dispositif de serrage de câble (37), qui est disposé sur le premier élément de paroi de chambre de test (5) et présente des paires de ressorts (38), au moyen desquelles les câbles (3) du faisceau de câbles (4) peuvent être maintenus en position dans la position d'insertion du dispositif de test (1).

10. Dispositif de test (1) selon l'une des revendications précédentes,
**caractérisé par**
une unité de translation (9), au moyen de laquelle le premier élément de paroi de chambre de test (5) est maintenu de manière à pouvoir être déplacé en translation par rapport au dispositif de réglage (7) et peut être réglé entre une position de test et une position d'insertion, le dispositif de réglage (7) et l'unité de translation (9) étant disposés de manière fixe l'un par rapport à l'autre.

11. Dispositif de test (1) selon la revendication 10,
**caractérisé en ce que**
deux premiers éléments de paroi de chambre de test (5) sont maintenus de manière à pouvoir être déplacés en translation par rapport au dispositif de réglage (7) par l'unité de translation (9), chacun pouvant être réglé en translation entre la position de test et une position d'insertion respective.

12. Ensemble de test comprenant un dispositif de test (1) selon l'une des revendications 2 à 11 et une pluralité de passages de câble (21) de différentes conceptions.

13. Procédé de test de l'étanchéité d'un noeud de soudure (2) reliant plusieurs câbles (3) à un faisceau de câbles (4) au moyen d'un dispositif de test (1) selon l'une des revendications 1 à 11 ou au moyen d'un ensemble de test selon la revendication 12.
